Europäisches Patentamt

European Patent Office

Office européen des brevets

(19)

(11) **EP 0 869 597 B1**

(12) **FASCICULE DE BREVET EUROPEEN**

(45) Date de publication et mention
de la délivrance du brevet:
**25.05.2005 Bulletin 2005/21**

(51) Int Cl.⁷: **H02H 3/093**

(21) Numéro de dépôt: **98410028.9**

(22) Date de dépôt: **18.03.1998**

(54) **Dispositif de protection contre les surcharges électriques avec des temps de déclenchement à froid et à chaud prédéterminés**

Elektrische Überlastschutzanordnung mit kalten und warmen vorbestimmten Auslösezeiten

Electrical overload protection device with predetermined cold and hot tripping items

(84) Etats contractants désignés:
**DE GB IT**

(30) Priorité: **04.04.1997 FR 9704364**

(43) Date de publication de la demande:
**07.10.1998 Bulletin 1998/41**

(73) Titulaire: **Schneider Electric Industries SAS**
**92500 Rueil-Malmaison (FR)**

(72) Inventeurs:
• **Nguyen, Hong**
**38050 Grenoble cedex 09 (FR)**
• **Perron, Patrick**
**38050 Grenoble cedex 09 (FR)**

(74) Mandataire: **Jouvray, Marie-Andrée et al**
**Schneider Electric SA,**
**Sce. Propriété Industrielle, - A7**
**38050 Grenoble Cedex 09 (FR)**

(56) Documents cités:
**US-A- 5 418 677**

• **CLERC G ET AL: "PROTECTION NUMERIQUE CONTRE LES SURINTENSITES DANS L'APPAREILLAGE STATIQUE" REVUE GENERALE DE L'ELECTRICITE, no. 6, 1 juin 1992, pages 51-54, XP000305755**

**Description**

L'invention concerne un dispositif de protection contre les surcharges électriques d'un système alimenté par l'intermédiaire d'un disjoncteur, dispositif comportant des moyens de mesure du courant d'alimentation du système, un déclencheur connecté aux moyens de mesure et comportant des moyens de traitement pour produire, après temporisation, un signal de déclenchement du disjoncteur si le courant dépasse un seuil de courant prédéterminé, les moyens de traitement comportant des moyens de détermination, avec une première constante de temps prédéterminée, pour déterminer une grandeur représentative de l'état thermique du système et des moyens de comparaison pour comparer ladite grandeur à un seuil de déclenchement prédéterminé de manière à réaliser une fonction de protection temps/courant prédéterminée.

Les circuits de traitement des déclencheurs connus introduisent dans le calcul de la grandeur représentative de l'état thermique du système à protéger une constante de temps. Les modèles utilisés aujourd'hui conduisent à un abaissement du temps de déclenchement à chaud par rapport au temps de déclenchement à froid. Typiquement le rapport est de 4 entre les temps de déclenchement à froid et à chaud dans les disjoncteurs, ce qui est représentatif de la réalité physique correspondant à l'échauffement de câbles. Dans certaines applications, notamment pour la protection des moteurs, le rapport entre les courbes à froid et à chaud ne doit pas être trop important pour éviter le risque de déclenchement intempestif.

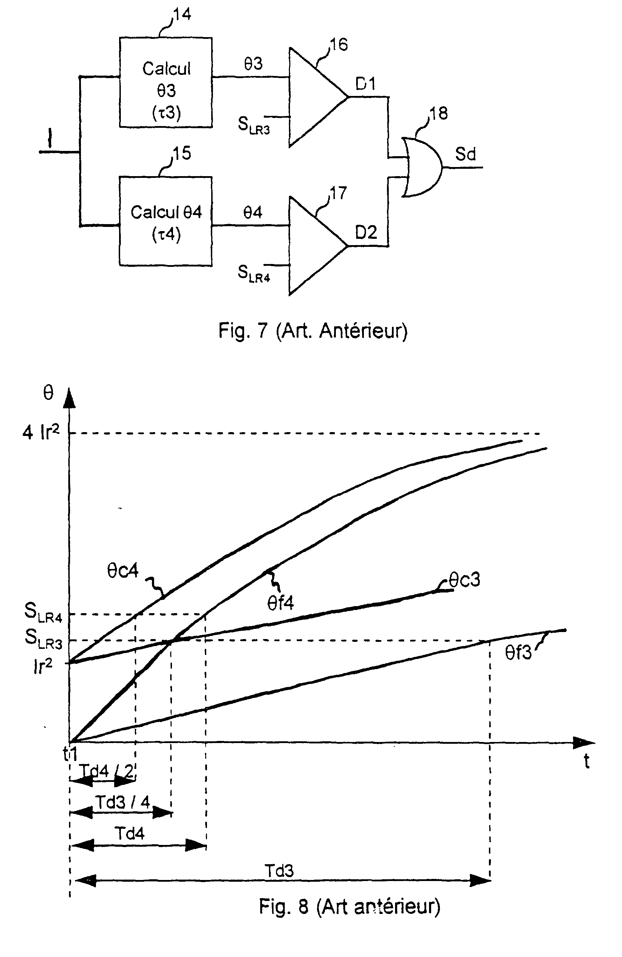

Certains déclencheurs permettent de résoudre partiellement ce problème. Un premier dispositif illustré plus en détail à la figure 7, effectue deux traitements en parallèle, avec des constantes de temps différentes. Un tel dispositif nécessite une importante puissance de calcul et n'est de ce fait pas souhaitable.

Le brevet US 5.418.677 décrit un dispositif dans lequel la grandeur thermique est limitée à une valeur maximum qui correspond à une fraction, par exemple 2/3, du seuil de déclenchement tant que le courant ne dépasse pas un certain seuil. Dans un tel dispositif, on peut constater que le rapport entre les temps de déclenchement à froid et à chaud est abaissé.

L'invention a pour but un dispositif permettant d'adapter le rapport entre les temps de déclenchement à froid et à chaud à une application particulière.

Selon l'invention, ce but est atteint par le fait que les moyens de détermination comportent des moyens pour comparer ladite grandeur à un seuil et des moyens pour définir une seconde constante de temps, supérieure à la première, lorsque la grandeur dépasse ledit seuil.

Selon un développement de l'invention, les moyens de détermination comportent des moyens de calcul de coefficients représentatifs desdites constantes de temps, lesdits coefficients étant utilisés par les moyens de détermination de la grandeur.

Les moyens de calcul des coefficients prennent en compte le temps de déclenchement désiré à froid et un rapport prédéterminé entre les temps de déclenchement à froid et à chaud du déclencheur pour une valeur prédéterminée du courant.

D'autres avantages et caractéristiques ressortiront plus clairement de la description suivante de différents modes de réalisation de l'invention, donnés à titre d'exemples non limitatifs et représentés aux dessins annexés dans lesquels :

La figure 1 représente, de façon très schématique, un dispositif de protection selon l'art antérieur dans lequel l'invention peut être mise en oeuvre.

Les figures 2 et 3 représentent plus en détail deux modes de réalisation d'un circuit de traitement d'un circuit de protection.

Les figures 4 à 6 illustrent respectivement les variations du courant (fig. 4) et de la grandeur thermique (fig. 5) en fonction du temps et les courbes de déclenchement (fig. 6) des dispositifs connus.

La figure 7 représente un autre mode de réalisation particulier d'un circuit de traitement d'un dispositif de protection selon l'art antérieur.

Les figures 8 et 9 représentent respectivement les variations en fonction du temps de la grandeur thermique et les courbes de déclenchement du dispositif selon la figure 7.

La figure 10 représente les variations en fonction du temps de la grandeur thermique d'un dispositif selon l'invention.

La figure 11 représente un mode de réalisation particulier du circuit de traitement d'un dispositif selon l'invention.

La figure 12 représente un mode particulier de réalisation d'un organigramme pouvant être mis en oeuvre dans un dispositif selon l'invention.

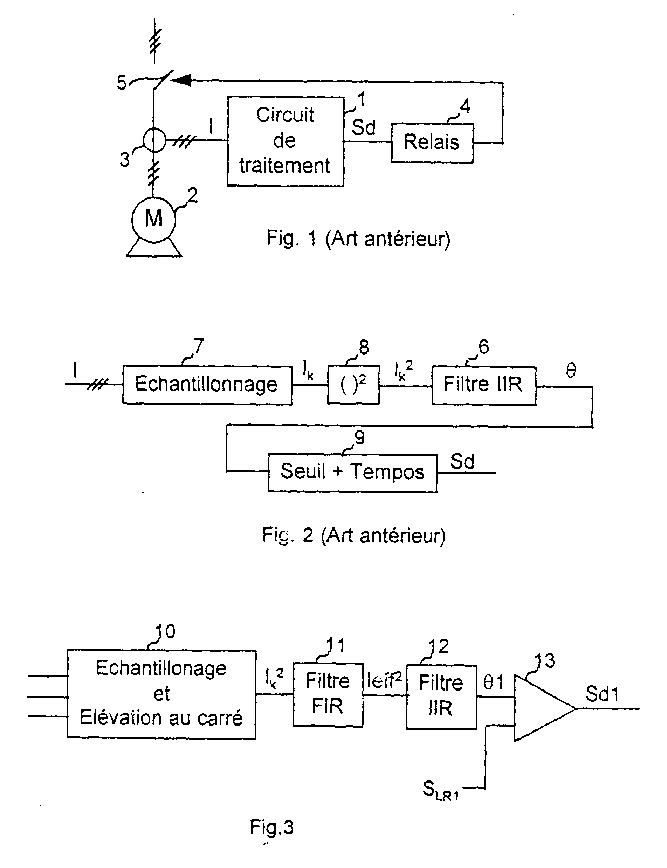

Sur la figure 1, le dispositif de protection comporte un déclencheur avec un circuit de traitement 1, à microprocesseur, recevant en entrée des signaux I représentatifs du ou des courants circulant dans le système à protéger. Celui-ci peut, par exemple, être constitué par un moteur 2. Des capteurs de courant 3 fournissent au déclencheur les signaux I représentatifs des courants. En cas de défaut, le circuit de traitement 1 fournit, éventuellement après une temporisation appropriée, des signaux Sd de déclenchement à un relais 4 qui provoque l'ouverture d'un disjoncteur 5 et l'interruption de l'alimentation du système à protéger.

Le mode de réalisation particulier du circuit de traitement selon l'art antérieur illustré à la figure 2 comporte un filtre numérique 6 à réponse impulsionnelle infinie, ou filtre IIR. Les signaux de courant I sont appliqués à l'entrée d'un circuit d'échantillonnage 7 qui fournit en sortie des échantillons de courant $I_k$. L'entrée du filtre IIR est connectée à la sortie du circuit d'échantillonnage 7 par l'intermédiaire d'un circuit 8 d'élévation au carré. Les signaux $\theta$ de sortie du filtre IIR sont représentatifs de l'état thermique du système à protéger et sont appliqués à l'entrée d'un circuit 9 de comparaison à des seuils de déclenchement. Le circuit 9 comporte éventuellement des temporisations et fournit un signal de déclenchement Sd si la grandeur $\theta$ est supérieure à un seuil prédéterminé pendant la durée de la temporisation correspondante.

La figure 3 illustre un mode de réalisation préférentiel du circuit de traitement d'un déclencheur long retard auquel l'invention peut être appliquée. Le mode de réalisation particulier de la figure 3 a été décrit dans la demande de brevet français n° 9616152 de la demanderesse, déposée le 23/12/1996, qui est incorporée par référence dans la présente demande. Il comporte un circuit 10 d'échantillonnage et d'élévation au carré recevant les signaux de courant I des capteurs de courant 3. Les carrés $I^2_k$ des échantillons de courant sont appliqués à l'entrée d'un filtre numérique 11 à réponse impulsionnelle finie, ou filtre FIR. Les signaux de sortie du filtre FIR 11 sont représentatifs du carré $Ieff^2$ de la valeur efficace du courant mesuré. Un filtre numérique 12 à réponse impulsionnelle infinie, ou filtre IIR, est connecté en série avec le filtre FIR 11. Le filtre IIR 12 reçoit en entrée les signaux $Ieff^2$ et fournit en sortie une grandeur $\theta1$ représentative de l'état thermique du système à protéger. Cette grandeur $\theta1$ est comparée à un seuil de déclenchement long retard $S_{LR1}$ par un comparateur 13 qui fournit un signal de déclenchement Sd1 lorsque $\theta1$ est supérieur ou égal au seuil $S_{LR1}$.

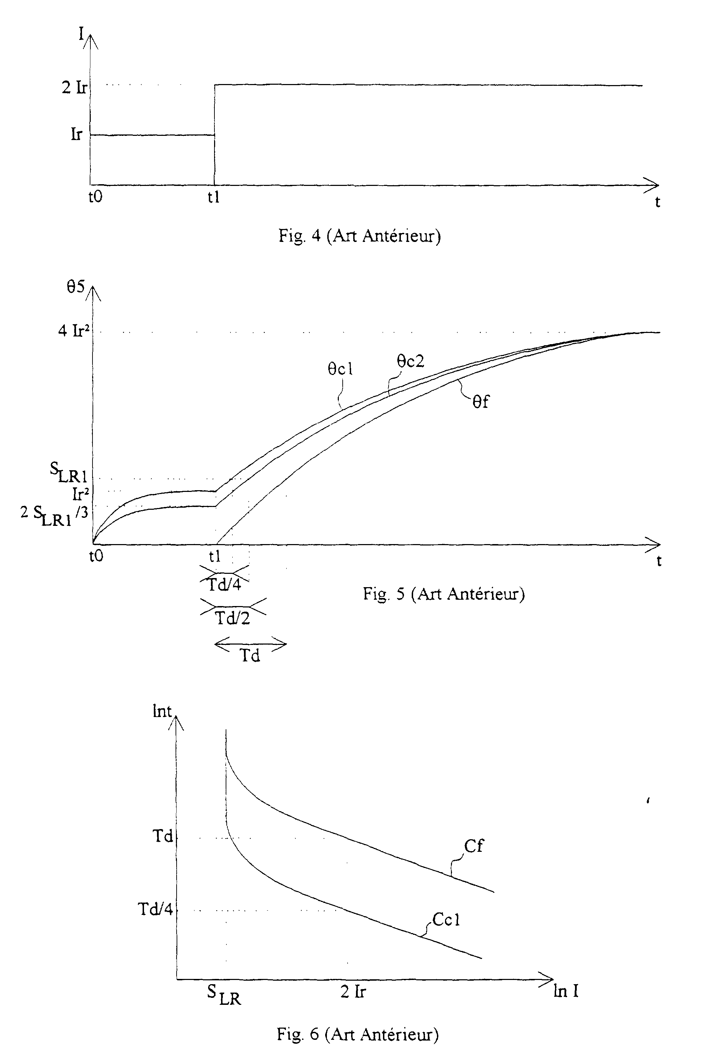

Le fonctionnement, à chaud et à froid, des dispositifs connus est illustré aux figures 4 à 6. Sur ces figures le comportement à froid est illustré par un courant I nul jusqu'à un instant t1 où le disjoncteur 5 est fermé. A la fermeture du disjoncteur, il y a surcharge, c'est à dire que le courant I dépasse un seuil de courant prédéterminé, par exemple égal à 1,125Ir, où Ir est le courant de réglage du déclencheur. Sur la figure 4, le courant de surcharge représenté est égal à 2Ir.

La grandeur $\theta f$ associée, représentative de l'état thermique à froid, est illustrée à la figure 5. Cette grandeur, nulle jusqu'à l'instant t1, tend vers $4Ir^2$, avec une constante de temps $\tau$. La grandeur $\theta f$ atteint le seuil $S_{LR1}$ après un temps de déclenchement Td. Préférentiellement, le seuil $S_{LR1}$ est égal à $(1,125Ir)^2$.

La courbe de déclenchement à froid correspondante, Cf, est illustrée à la figure 6. Cette courbe est du même type pour tous les dispositif décrits ci-dessus (figures 2, 3 et brevet US 5.418.677).

Le comportement à chaud est illustré sur la figure 4 par un courant I=Ir entre les instants t0 de fermeture du disjoncteur et t1 d'apparition d'une surchage où le courant passe à 2Ir.

Dans les dispositifs des figures 2 et 3, la grandeur $\theta c1$, représentative de l'état thermique à chaud, est telle qu'illustrée à la figure 5. Elle augmente avec la même constante de temps $\tau$ que la grandeur $\theta f$ dans le fonctionnement à froid, jusqu'à $Ir^2$ entre les instants t0 et t1. Puis, à partir de l'instant t1, elle augmente de nouveau, avec la même constante de temps $\tau$ et atteint le seuil de déclenchement $S_{LR1}$ après un temps de déclenchement égal à Td/4. La courbe de déclenchement à chaud correspondante Cc1 est illustrée à la figure 6.

Le rapport de 4 entre les temps de déclenchement à froid et à chaud est trop élevé pour certaines applications, notamment pour la protection des moteurs.

Dans le dispositif du brevet US 5.418.677, la grandeur $\theta c2$, représentative de l'état thermique à chaud (fig. 5) est limitée à une valeur maximale tant qu'il n'y a pas surcharge. Dans un mode de réalisation préférentiel, cette limite est égale à 2/3 du seuil de déclenchement, soit $2S_{LR1}/3$. L'évolution de $\theta c2$, représentée à la figure 5, montre que ceci conduit à une augmentation du temps de déclenchement à chaud par rapport à $\theta c1$. En effet, à l'instant t1, la grandeur $\theta c2$ est inférieure à $\theta c1$ et met, en conséquence, avec la même constante du temps $\tau$, plus de temps pour atteindre le seuil $S_{LR1}$ à partir de l'instant t1 d'apparition de la surcharge. Sur la figure 5, le temps de déclenchement à chaud associé à la grandeur $\theta c2$ est de l'ordre de Td/2.

Dans le mode de réalisation connu de la figure 7, deux circuits de calcul sont connectés en parallèle. Les signaux représentatifs du courant I sont simultanément appliqués à un circuit 14 de calcul d'une grandeur thermique $\theta3$, ayant une constante de temps $\tau3$, et à un circuit 15 de calcul d'une grandeur thermique $\theta4$, ayant une constante de temps $\tau4$. Dans un mode de réalisation préférentiel $\tau3=4\tau4$. La constante de temps $\tau3$ est , en pratique, du même ordre de grandeur que la constante de temps τ précitée, représentative de la constante de temps d'échauffement du cuivre, de manière à ce que la grandeur thermique soit représentative de l'échauffement des câbles électriques du réseau. La constante de temps τ4 est, quant à elle, représentative de la constante de temps d'échauffement du fer, plus représentative pour la protection moteur.

Les signaux θ3 et θ4, de sortie des circuits 14 et 15 sont respectivement comparés par des comparateurs 16 et 17, à des seuils de déclenchement $S_{LR3}$ et $S_{LR4}$. Ceux-ci fournissent respectivement des signaux D1 et D2 à un circuit OU 18 lorsque l'un des seuils de déclenchement est dépassé. Un signal de déclenchement Sd est fourni par le circuit 18 lorsqu'il reçoit un signal D1 ou D2.

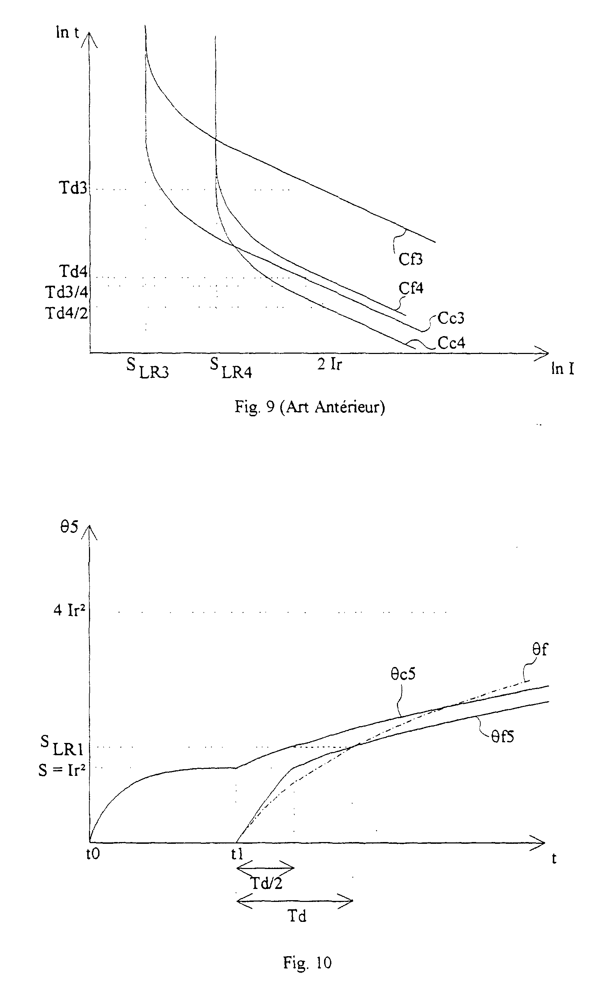

Dans un mode de réalisation préférentiel, $S_{LR3} = (1,125Ir)^2$ et $S_{LR4} = (1,4\ Ir)^2$. Les figures 8 et 9 représentent respectivement les grandeurs θf3 et θf4 à froid et θc3 et θc4 à chaud de la première branche, 14 et 16, et de la seconde branche, 15 et 17, du circuit de la figure 7, ainsi que les courbes de déclenchement à froid Cf3 et Cf4 et à chaud Cc3 et Cc4. Il ressort de ces figures, que la première branche (14,16) conduit à des temps de déclenchement Td3 à froid et Td3/4 à chaud comparables à ceux représentés aux figures 5 et 6. Par contre, la seconde branche (15,17) conduit à des temps de déclenchement plus courts Td4 et Td4/2 avec un rapport maximum de 2 entre les courbes à froid et à chaud. Pour les valeurs les plus faibles du courant, c'est la première branche qui fixe le temps de déclenchement, tandis qu'ensuite c'est la seconde branche qui est la plus rapide. Ceci permet d'éviter des déclenchements intempestifs.

Un tel dispositif présente l'inconvénient de nécessiter une puissance de calcul importante. L'invention permet d'obtenir des temps de déclenchement prédéterminés aussi bien à froid qu'à chaud, adaptés à une application prédéterminée, sans augmenter de façon substantielle la puissance de calcul nécessaire.

Les variations de la grandeur thermique θ5, en fonction du temps, d'un dispositif selon l'invention sont représentées à la figure 10. Sur cette figure on a représenté les variations à froid θf5 et à chaud θc5, ainsi qu'une courbe à froid classique θf du même type que sur la figure 5. Dans le mode de réalisation représenté, le temps de déclenchement à froid est Td, comme sur la figure 5, et le temps de déclenchement à chaud est Td/2.

Pour cela les courbes θ5 (t) comportent deux constantes de temps différentes successives. Tant que θ5 est inférieur ou égal à un seuil prédéterminé S, inférieur au seuil de déclenchement $S_{LR1}$, S=Ir² sur la figure 10, la constante de temps est τ5$_a$, aussi bien pour les courbes à chaud (θc5) qu'à froid (θf5). Puis, lorsque θ5 dépasse ce seuil S, la constante de temps est augmentée à une valeur τ5$_b$ supérieure à τ5$_a$. On diminue ainsi, la croissance de la grandeur θc5 à chaud. Pour que le temps de déclenchement Td reste inchangé, les constantes de temps τ5$_a$ et τ5$_b$ sont choisies de manière à ce que : τ5$_a$ < τ< τ5$_b$, τ étant la constante de temps désirée pour la courbe à froid θf de type connu.

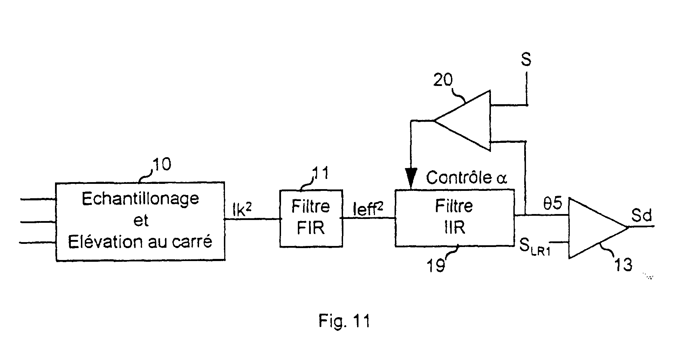

L'invention peut être appliquée à tout circuit de traitement de type connu. La figure 11 illustre son application à un circuit du type de la figure 3. Le filtre IIR 12 de la figure 3 est remplacé par un filtre IIR19 comportant une entrée de contrôle supplémentaire. Cette entrée permet le contrôle d'un coefficient α, tel que α =Te/τ, τ étant la constante de temps du filtre IIR et Te la période d'échantillonnage des signaux d'entrée du filtre 19. La sortie d'un comparateur 20, recevant en entrée les signaux θ5 et le seuil S, contrôle le coefficient α .

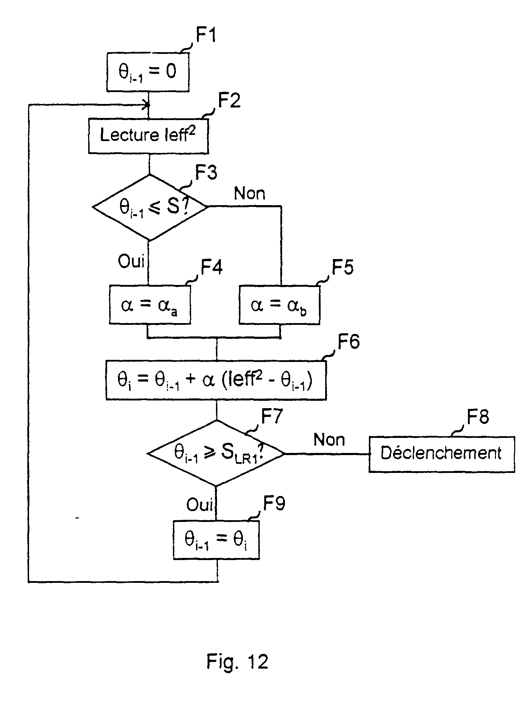

L'organigramme de la figure 12, illustre un autre mode de réalisation de l'invention, mis en oeuvre sous forme de logiciel dans un filtre IIR 12 d'un dispositif selon la figure 3. Dans ce mode de réalisation, après une première étape F1 pendant laquelle la valeur θ$_{i-1}$ précédemment calculée de θ5, est mise à zéro, une nouvelle valeur θ$_i$ de la grandeur θ5 est calculée après chaque nouveau calcul au carré Ieff² de la valeur efficace par le filtre FIR 11. Après lecture de Ieff² (en F2), la valeur θ$_{i-1}$ est comparée au seuil S. Si θ$_{i-1}$ ≤S (sortie oui de F3), le coefficient α est mis (en F4) à une première valeur α$_a$, correspondant à la constante de temps τ5$_a$. Sinon (sortie non de F3), le coefficient α est mis (en F5) à une seconde valeur α$_b$, correspondant à la constante de temps τ5$_b$. Après les étapes F4 ou F5, le filtre IIR passe à une étape F6 de calcul de la nouvelle valeur θ$_i$ de θ5 :

$$\theta_i = \theta_{i-1} + \alpha(Ieff^2 - \theta_{i-1}) \tag{1}$$

Puis θ$_i$ est comparée (en F7) au seuil $S_{LR1}$. Si ce seuil est atteint ou dépassé (sortie oui de F7), un signal Sd de déclenchement est produit (en F8). Sinon, la valeur θ$_i$ devient la nouvelle valeur θ$_{i-1}$ (en F9) avant que le programme ne se reboucle sur la lecture (F2) de la nouvelle valeur Ieff². Pour chaque valeur du courant, le temps de déclenchement fait intervenir les 2 contantes de temps et est donné par l'équation :

$$t = \tau5_a\ \ell n(\frac{Ieff^2}{Ieff^2 - S}) + \tau5_b\ \ell n(\frac{Ieff^2 - S}{Ieff^2 - S_{LR1}}) \tag{2}$$

Pour une valeur prédéterminée du courant, le temps de déclenchement à froid Tdf est prédéterminé Tdf = Td, et le rapport x entre les temps de déclenchement à froid Tdf et à chaud Tdc est également prédéterminé.

On peut alors déduire de l'équation (2) les valeurs de $\tau5a$ et $\tau5b$, et en conséquence les valeurs des coefficients $\alpha_a$ et $\alpha_{b.}$
En effet :

$$Tdc = Td / x = \tau5_b \left( \frac{Ieff^2 - S}{Ieff^2 - S_{LR1}} \right) \tag{3}$$

$$Td - Td / x = \tau5_a \left( \frac{Ieff^2}{Ieff^2 - S} \right) \tag{4}$$

$$\alpha_a = Te / \tau5_a \tag{5}$$

$$\alpha_b = Te / \tau5_b \tag{6}$$

Dans les modes de réalisation décrits ci-dessus, le temps de déclenchement prédéterminé Td est fixé pour I = 2Ir. En pratique on peut utiliser toute autre valeur du courant de surcharge et, classiquement, en protection moteur, on considère le temps de déclenchement Td à 7,2Ir correspondant au réglage de la temporisation de la fonction long retard du déclencheur. On obtient alors pour $\alpha_a$ et $\alpha_b$ les valeurs suivantes, lorsque $S = Ir^2$ et $S_{LR1} = (1{,}125Ir)^2$ :

$$\alpha_a = \frac{\frac{x}{(x-1)}}{Td} \cdot Te \cdot \ell n \left[ \frac{(7{,}2Ir)^2}{(7{,}2Ir)^2 - Ir^2} \right] \tag{7}$$

et

$$\alpha_b = \frac{x}{Td} \cdot Te \cdot \ell n \left[ \frac{(7{,}2Ir)^2 - Ir^2}{(7{,}2Ir)^2 - (1{,}125Ir)^2} \right] \tag{8}$$

Dans un mode de réalisation préférentiel, en protection moteur, x est de l'ordre de 2, de préférence x=2,1 d'où $\frac{x}{x-1} \approx 1{,}9$ et :

$$\alpha_a = \frac{1{,}9Te}{Td} \ell n \left( \frac{7{,}2^2}{7{,}2^2 - 1} \right) \tag{9}$$

et :

$$\alpha_b = \frac{2{,}1Te}{Td} \ell n \left( \frac{7{,}2^2 - 1}{7{,}2^2 - 1{,}125^2} \right) \tag{10}$$

Le choix des valeurs x et Td est fonction de l'application, et l'invention permet facilement de déterminer les coefficients $\alpha_a$ et $\alpha_b$, correspondant aux deux constantes de temps $\tau5_a$ et $\tau5_b$, à partir de ces valeurs.
Le circuit comporte des moyens de calcul de $\alpha_a$ et $\alpha_b$ à partir du réglage des valeurs Td et x.
Sur la figure 11, les signaux d'entrée du filtre IIR19 sont les signaux $Ieff^2$ de sortie du filtre FIR11. L'invention est également applicable à un circuit selon la figure 2 dans lequel les signaux d'entrée du filtre IIR6 sont les échantillons

$I_k^2$ de courant. La période Te d'échantillonnage prise en compte pour le calcul de $\alpha_a$ et $\alpha_b$ correspond en fait à la période d'application d'une nouvelle grandeur calculée ($I_k^2$ ou $Ieff^2$ selon le cas) à l'entrée du filtre IIR.

**Revendications**

1. Dispositif de protection contre les surcharges électriques d'un système (2) alimenté par l'intermédiaire d'un disjoncteur (5), dispositif comportant des moyens (3) de mesure du courant (I) d'alimentation du système, un déclencheur connecté aux moyens de mesure et comportant des moyens de traitement (1) pour produire, après temporisation, un signal de déclenchement (Sd) du disjoncteur si le courant (I) dépasse un seuil de courant prédéterminé, les moyens de traitement (1) comportant des moyens de détermination (19), avec une première constante de temps prédéterminée ($\tau5a$), pour déterminer une grandeur ($\theta5$) représentative de l'état thermique du système et des moyens de comparaison (13) pour comparer ladite grandeur ($\theta5$) à un seuil de déclenchement ($S_{LR1}$) prédéterminé de manière à réaliser une fonction de protection temps/courant prédéterminée, dispositif **caractérisé en ce que** les moyens de détermination (19), comportent des moyens (20, F3) pour comparer ladite grandeur ($\theta5$) à un seuil (S) et des moyens (F4, F5) pour définir une seconde constante de temps ($\tau5_b$), supérieure à la première ($\tau5_a$), lorsque la grandeur ($\theta5$) dépasse ledit seuil (S).

2. Dispositif selon la revendication 1, **caractérisé en ce que** les moyens de détermination (19) comportent des moyens de calcul de coefficients ($\alpha_a, \alpha_b$) représentatifs desdites constantes de temps ($\tau5_a, \tau5_b$), lesdits coefficients étant utilisés par les moyens de détermination de la grandeur ($\theta5$).

3. Dispositif selon la revendication 2, **caractérisé en ce que** les moyens de calcul des coefficients ($\alpha_a, \alpha_b$) prennent en compte le temps de déclenchement désiré à froid (Tdf) et un rapport prédéterminé (x) entre les temps de déclenchement à froid et à chaud du déclencheur pour une valeur prédéterminée du courant.

4. Dispositif selon la revendication 3, **caractérisé en ce que** le système à protéger étant constitué par un moteur, le rapport (x) est de l'ordre de deux pour un courant de 7,2Ir, Ir étant le courant de réglage du déclencheur, le temps de déclenchement à froid correspondant au réglage de la temporisation de la fonction long retard du déclencheur.

**Patentansprüche**

1. Einrichtung zum Schutz eines über einen Leistungsschalter (5) gespeisten Systems (2) gegen elektrische Überlasten, welche Einrichtung Meßmittel (3) zur Messung des Versorgungsstroms (I) des Systems sowie einen Auslöser umfaßt, der mit den Meßmitteln verbunden ist und Verarbeitungsmittel (1) umfaßt, um nach einer Zeitverzögerung ein Auslösesignal (Sd) zur Abschaltung des Leistungsschalters zu erzeugen, wenn der Strom (I) einen festgelegten Stromansprechwert überschreitet, wobei die Verarbeitungsmittel (1) Bestimmungsmittel (19) mit einer ersten festgelegten Zeitkonstante ($\tau5a$) zur Bestimmung einer den thermischen Zustand des Systems abbildenden Größe ($\theta5$) sowie Vergleichsmittel (13) zum Vergleich der genannten Größe ($\theta5$) mit einem festgelegten Auslöseansprechwert ($S_{LR1}$) umfassen, derart daß eine bestimmte Zeit-/Strom-Schutzfunktion realisiert wird, **dadurch gekennzeichnet, daß** die Bestimmungsmittel (19) Mittel (20, F3) zum Vergleich der genannten Größe ($\theta5$) mit einem Schwellwert (S) sowie Mittel (F4, F5) umfassen, die dazu dienen, eine über der ersten Zeitkonstante ($\tau5_a$) liegende zweite Zeitkonstante ($\tau5_b$) zu bestimmen, wenn die Größe ($\theta5$) den genannten Schwellwert (S) übersteigt.

2. Einrichtung nach Anspruch 1, **dadurch gekennzeichnet, daß** die Bestimmungsmittel (19) Rechenmittel zur Berechnung von die genannten Zeitkonstanten ($\tau5_a, \tau5_b$) abbildenden Koeffizienten ($\alpha_a, \alpha_b$) umfassen, welche genannten Koeffizienten von den Bestimmungsmitteln zur Bestimmung der Größe ($\theta5$) verwendet werden.

3. Einrichtung nach Anspruch 2, **dadurch gekennzeichnet, daß** die Rechenmittel zur Berechnung der Koeffizienten ($\alpha_a, \alpha_b$) die gewünschte Kaltauslösezeit (Tdf) sowie ein bestimmtes Verhältnis (x) zwischen der Kaltauslösezeit und der Warmauslösezeit des Auslösers bei einem bestimmten Stromwert berücksichtigen.

4. Einrichtung nach Anspruch 3, **dadurch gekennzeichnet, daß** bei Verwendung eines Motors als zu schützendem System das Verhältnis (x) bei einem Strom von 7,2 Ir etwa zwei beträgt, wobei Ir der Einstellstrom des Auslösers ist und die Kaltauslösezeit dem Einstellwert der Zeitverzögerung des Langzeitverzögerungsschutzes des Auslösers entspricht.

**Claims**

1. Device for protection against electrical overloads of a system (2) supplied via a circuit breaker (5), device comprising measuring means (3) for measuring the supply current (I) of the system, a trip unit connected to the measuring means and comprising processing means (1) to produce, after a time delay, a tripping signal (Sd) of the circuit breaker if the current (I) exceeds a preset current threshold, the processing means (1) comprising determining means (19), with a first preset time constant ($\tau 5a$), to determine a quantity ($\theta 5$) representative of the thermal state of the system and comparison means (13) to compare said quantity ($\theta 5$) with a preset tripping threshold ($S_{LR1}$)so as to perform a predetermined time/current protection function, device **characterized in that** the determining means (19) comprise means (20, F3) for comparing said quantity ($\theta 5$) with a threshold (S) and means (F4, F5) for defining a second time constant ($\tau 5_b$), greater than the first ($\tau 5_a$), when the quantity ($\theta 5$) exceeds said threshold (S).

2. Device according to claim 1, **characterized in that** the determining means (19) comprise means for computing coefficients ($\alpha_a, \alpha_b$) representative of said time constants ($\tau 5_a, \tau 5_b$), said coefficients being used by the means for determining the quantity ($\theta 5$).

3. Device according to claim 2, **characterized in that** the means for computing the coefficients ($\alpha_a, \alpha_b$) take into account the required cold tripping time (Tdf) and a preset ratio (x) between the cold and hot tripping times of the trip unit for a preset current value.

4. Device according to claim 3, **characterized in that** the system to be protected being constituted by a motor, the ratio (x) is about two for a current of 7.2Ir, Ir being the trip unit setting current, the cold tripping time corresponding to the time delay setting of the trip unit long delay function.

Fig. 1 (Art antérieur)

Fig. 2 (Art antérieur)

Fig. 3

Fig. 4 (Art Antérieur)

Fig. 5 (Art Antérieur)

Fig. 6 (Art Antérieur)

9

Fig. 7 (Art. Antérieur)

Fig. 8 (Art antérieur)

Fig. 9 (Art Antérieur)

Fig. 10

Fig. 11

F1

$$\theta_{i-1} = 0$$

F2

Lecture Ieff$^2$

F3

$$\theta_{i-1} \leqslant S?$$

Non

Oui

F4

$$\alpha = \alpha_a$$

F5

$$\alpha = \alpha_b$$

F6

$$\theta_i = \theta_{i-1} + \alpha \ (Ieff^2 - \theta_{i-1})$$

F7

$$\theta_{i-1} \geqslant S_{LR1}?$$

Non

F8

Déclenchement

Oui

F9

$$\theta_{i-1} = \theta_i$$

Fig. 12